Europäisches Patentamt

European Patent Office

Office européen des brevets

(19)

(11) Veröffentlichungsnummer : **0 334 200 B1**

(12) # EUROPÄISCHE PATENTSCHRIFT

(45) Veröffentlichungstag der Patentschrift :
**12.08.92 Patentblatt 92/33**

(51) Int. Cl.[5] : **C21D 9/00,** C21D 11/00,
B21J 1/06, C22F 1/04

(21) Anmeldenummer : **89104668.2**

(22) Anmeldetag : **16.03.89**

(54) **Verfahren zum Beheizen von strangförmigem Gut.**

(30) Priorität : **24.03.88 DE 3809932**

(43) Veröffentlichungstag der Anmeldung :
**27.09.89 Patentblatt 89/39**

(45) Bekanntmachung des Hinweises auf die
Patenterteilung :
**12.08.92 Patentblatt 92/33**

(84) Benannte Vertragsstaaten :
**AT CH ES FR GB IT LI**

(56) Entgegenhaltungen :
**AT-A- 351 337**
**DE-B- 2 047 499**
**DE-C- 3 322 874**
**US-A- 2 664 283**
**US-A- 2 953 794**
**US-A- 4 559 854**

(73) Patentinhaber : **Otto Junker GmbH**
**Lammersdorf**
**W-5107 Simmerath (DE)**

(72) Erfinder : **Hürtgen, Reinhold**
**Wiehweg 15**
**W-5107 Simmerath (DE)**
Erfinder : **Schilder, Rudolf, Dr.-Ing.**
**Friesenrather Weg 16**
**W-5100 Aachen (DE)**

(74) Vertreter : **König, Werner, Dipl.-Ing.**
**Habsburgerallee 23-25**
**W-5100 Aachen (DE)**

## Beschreibung

Die Erfindung betrifft ein Verfahren zum Beheizen von strangförmigem Metallgut, z.B. strangförmigem Aluminium, beim schrittweisen Durchlauf durch mehrere in Reihe hintereinander liegende, getrennt steuerbare Heizzonen, für die jeweils eine Solltemperatur vorgegeben und an einer Kontrollmeßstelle überwacht wird, wobei das strangförmige Metallgut nach Erreichen der Solltemperaturen zum Abscheren eines Blockes der Länge X um die Strecke A + X vorwärtsgefördert und nach dem Abscheren des Blockes um die Länge A zurückgefördert wird, wobei A der Abstand zwischen den vor dem Vorwärtsfördern in der letzten Heizzone liegenden vorderen Ende des Metallguts und der Schere ist.

Aus der Praxis ist es bekannt, Metallstränge durch mehrere getrennt steuerbare Heizzonen schrittweise hindurchzufördern und anschließend mittels einer hinter den Heizzonen angeordneten Warmschere auf bestimmte Längen abzuscheren. Die abgescherten Blöcke können dann einer Presse zur Weiterverarbeitung zugeführt werden.

Der Transport der Metallstränge wird bei diesem bekannten Verfahren so durchgeführt, daß der Metallstrang z.B. bei Abruf eines Blockes von der Presse um eine solche Wegstrecke aus der letzten Heizzone herausgefördert wird, die der Entfernung A der Schere vom Ende des Metallstranges in der letzten Heizzone zuzüglich der Länge X eines abzuscherenden Blokkes entspricht.

Nach dem Abscheren eines Blockes wird der Reststrang wieder um die Strecke A zurückgefördert, so daß das Ende des Reststranges in die gewünschte Position der letzten Heizzone gelangt, um dort auf den Temperatursollwert aufgeheizt oder auf der bereits erreichten Solltemperatur gehalten zu werden.

Während des Vor- und Rückwärtsförderns des strangförmigen Gutes wird bei diesem bekannten Erwärmungverfahren die Heizung abgeschaltet, da eine treffsichere Temperaturmessung während dieser Zeit nicht möglich ist oder der Aufwand für die Regelung der Heizleistung zu aufwendig erscheint.

Der Erfindung liegt nun die Aufgabe zugrunde, den Ausnutzungsgrad der Heizzonen bzw. die Durchsatzleistung einer mehrere Heizzonen und eine Warmschere aufweisenden Erwärmungsanlage entsprechend den eingangs aufgeführten Merkmalen wesentlich zu erhöhen und dabei eine optimale Temperaturführung zu erzielen.

Das wird durch die Erfindung bei einem Verfahren der eingangs erwähnten Art dadurch erreicht, daß zumindest in der ersten Heizzone an der Oberfläche des Metallguts unmittelbar vor dem Vorwärtsfördern dessen Temperaturen an der Kontrollmeßstelle dieser Heizzone sowie an einer demgegenüber um die Strecke L nach rückwärts versetzten Meßstelle erfaßt werden, wobei L≧X ist, daß aus diesen beiden Temperaturmessungen der Temperaturgradient bestimmt wird und daß davon ausgehend die Heizleistung für diese Heizzone und/oder die sich daran anschließende Heizzone bzw. anschließenden Heizzonen ermittelt und aufgebracht wird, die nach dem Vorwärtsfördern um die Strecke A + X und dem Rückwärtsfördern um die Strecke A wenigstens an der Kontrollmeßstelle in der ersten Heizzone im wesentlichen wieder die Solltemperatur ergibt.

Die Idee gemäß der Erfindung ermöglicht es, während der Transportbewegung des strangförmigen Gutes auf eine Temperaturmessung zu verzichten.

Zur Erbringung der eforderlichen Heizleistung können Induktionsspulen und/oder andere Beheizungsverfahren angewendet werden, z.B. kann mit Gas- und Ölerwärmungsanlagen sowie mit elektrisch-widerstandsbeheizten Anlagen gearbeitet werden.

Zur Temperaturerfassung können neben Thermoelementen z.B. auch optische Temperaturmeßeinrichtungen verwendet werden.

Das erfindungsgemäße Verfahren eignet sich z.B. zum Erwärmen von Aluminiumsträngen, ist aber in gleicher Weise auch für andere Metalle einsetzbar.

Ist beim Blockabruf von der Presse der Temperatursollwert in allen Heizzonen erreicht, werden wenigstens in der ersten Heizzone unmittelbar vor der Einleitung des Vorwärtstransportes des strangförmigen Gutes die Meßergebnisse, die von der Kontrollmeßstelle für den Vergleich der Strangguttemperatur mit dem Temperatursollwert und von der um die Strecke L vor dieser Kontrollmeßstelle liegenden zusätzlichen Meßstelle ermittelt wurden, auf einen Rechner übertragen. Dessen Rechenergebnisse werden zur Steuerung der Heizenergie während der Transportphasen des strangförmigen Gutes und beim Schervorgang herangezogen und zwar dergestalt, daß entweder an der neuen, nach dem Abscheren eines Blockes und dem Rücktransport des Reststranges an diesem sich ergebenden Kontrollmeßstelle für den Vergleich der Strangguttemperatur mit dem Temperatursollwert an der Gutoberfläche sich der Temperatursollwert einstellt oder die Temperaturmessung mittels Meßeinrichtungen nach dem Rücktransport des Reststranges wieder aufgenommen wird, bis sich die Solltemperatur im Erwärmungsgut einstellt.

Wenn stets gleich lange Blöcke abgeschert werden sollen, entspricht die Strecke L der Blocklänge. Bei der Abscherung verschieden langer Blöcke entspricht die Strecke L der größten Blocklänge.

Das erfindungsgemäße Verfahren benötigt somit lediglich den Einsatz einer zusätzlichen Meßstelle und

2

eines Rechners, um den Heizbetrieb gemäß dem eingangs genannten Verfahren zu optimieren und den höchstmöglichen Durchsatz zu gewährleisten.

Wenn also der Temperaturgradient in einer Heizzone bestimmt worden ist, kann davon ausgehend die in dieser Heizzone sowie in der folgenden bzw. den folgenden Heizzone(n) während der Förderung aufzubringende Heizleistung errechnet und gesteuert werden, um in einer oder in mehreren Heizzonen nach dem Rückwärtsfördern wieder Solltemperatur zu ergeben.

Das erfindungsgemäße Verfahren kann ferner so ausgeführt werden, daß zwischen den Kontrollmeßstellen aufeinanderfolgender Heizzonen ein Temperaturgradient errechnet und zur Bestimmung und Steuerung der Heizleistung benutzt wird, die in der jeweils am weitesten vorn liegenden der aufeinanderfolgenden Heizzonen nach dem Vorwärtsfördern um die Strecke A + X und dem Rückwärtsfördern um die Strecke A an der dortigen Kontrollmeßstelle im wesentlichen wieder die Solltemperatur ergibt.

Dies ergibt in Verbindung mit der Bestimmung des Temperaturgradienten innerhalb einer Heizzone eine größere Genauigkeit in der Berechnung der Heizleistung, die in der jeweils vorderen Heizzone aufzubringen ist.

Das erfindungsgemäße Verfahren kann ferner so ausgeführt werden, daß die Heizleistung durch Ein- und Ausschalten mindestens einer Heizvorrichtung bei veränderbarer Einschaltdauer bzw. Einschalthäufigkeit bewirkt wird.

Das erfindungsgemäße Verfahren kann ferner so ausgeführt werden, daß Heizzonen, deren Heizleistung in der Phase zwischen dem Beginn des Vorwärtsförderns und dem Ende des Rückwärtsförderns nicht ausgehend von einem Temperaturgradienten am Metallgut gesteuert wird, mit Hilfe einer Zeitsteuerung beheizt werden.

So ist es z.B. möglich, den Temperaturgradienten in der ersten Heizzone zu bestimmen und davon ausgehend die in der folgenden Heizzone zu erbringende Heizleistung zu berechnen und dort aufzubringen, während in der ersten Heizzone die während des Förderns erbrachte Heizleistung über eine Zeitsteuerung bestimmt wird.

An Hand von Zeichnungen werden Ausführungsbeispiele der Erfindung erläutert. Es zeigt:

Fig. 1 eine Induktionswärmungsanlage im Zustand der Aufheizung

Fig. 2 die Anlage nach Fig. 1 kurz vor dem Abscheren eines Blockes

Fig. 3 angenähert den Temperaturverlauf des zu erwärmenden Metallgutes bei Erreichen der Sollwerte der Temperaturen in den einzelnen Heizzonen einer Induktionserwärmungsanlage und

Fig 4 angenähert den Temperaturverlauf eines Aluminiumstranges in einer gasbeheizten Erwärmungsanlage

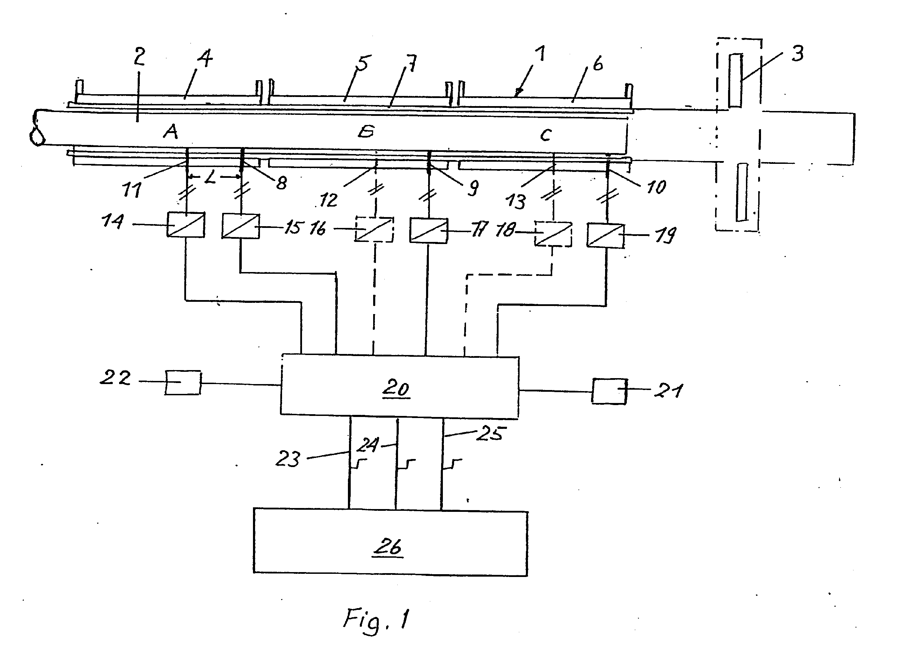

In Fig. 1 ist eine Induktionserwärmungsanlage 1 für Aluminiumstränge 2 dargestellt, von denen mit Hilfe einer Warmschere 3 Blöcke mit vorbestimmter Länge abgeschnitten werden sollen.

Die Induktionserwärmungsanlage 1 weist drei getrennt beaufschlagbare zylindrische Induktionsspulen 4, 5, 6 auf, welche gleichzeitig die Heizzonen A, B, C definieren. Zwischen dem Aluminiumstrang 2 und den Induktionsspulen 4, 5, 6 befindet sich eine Wärmeisolierung 7, die aus bekannten Wärmeisoliermitteln, wie Keramikfaserplatten oder Keramikmasse oder einer Kombination von diesen feuerfesten Materialien, bestehen kann.

In jeder Heizzone A, B, C ist ein Thermoelement 8, 9, 10 zur Überwachung der Solltemperatur jeder Heizzone im Einsatz. In der Heizzone A ist im Abstand L in Förderrichtung hinter dem Thermoelement 8 ein weiteres Thermoelement 11 vorgesehen.

Auch die Heizzonen B, C können je ein solches zusätzliches Thermoelement 12, 13 aufweisen.

Die Thermoelemente 8-13 sind über Meßumformer 14-19 mit einem Rechner 20 verbunden. In den Rechner 20 werden außerdem die Solltemperatur der Heizzonen A, B, C über eine Eingabevorrichtung 21 und die Länge der abzuscherenden Blöcke über eine Eingabevorrichtung 22 eingegeben.

Der Rechner 20 ist über Ausgangsleitungen 23, 24, 25 mit einer Steuereinrichtung 26 für die Heizenergie der Heizzonen A, B, C verbunden. Dabei überträgt die Ausgangsleitung 23 die Rechenergebnisse für die Heizzone A, die Ausgangsleitung 24 die Rechenergebnisse für die Heizzone B und die Ausgangsleitung 25 die Rechenergebnisse für die Heizzone C.

Die Verfahrensweise der Anlage ist folgende:

Ein Aluminiumstrang 2 wird in den Innenraum der Induktions spulen 4, 5, 6 der Induktionserwärmungsanlage 1 hineingefahren bzw. -geschoben, bis er die in Fig. 1 dargestellte Lage erreicht hat. Danach werden die Induktionsspulen 4, 5, 6 eingeschaltet und mit voller Leistung betrieben. Gleichzeitig werden die Thermoelemente 8-13 auf die Oberfläche des Aluminiumstranges 2 gedrückt. Sobald in einer Heizzone A, B, C der Temperatursollwert im Aluminiumstrang erreicht ist, wird in dieser Heizzone die Heizleistung auf Warmhaltebetrieb umgeschaltet, bis sich auch in den anderen Heizzonen die Temperatursollwerte eingestellt haben.

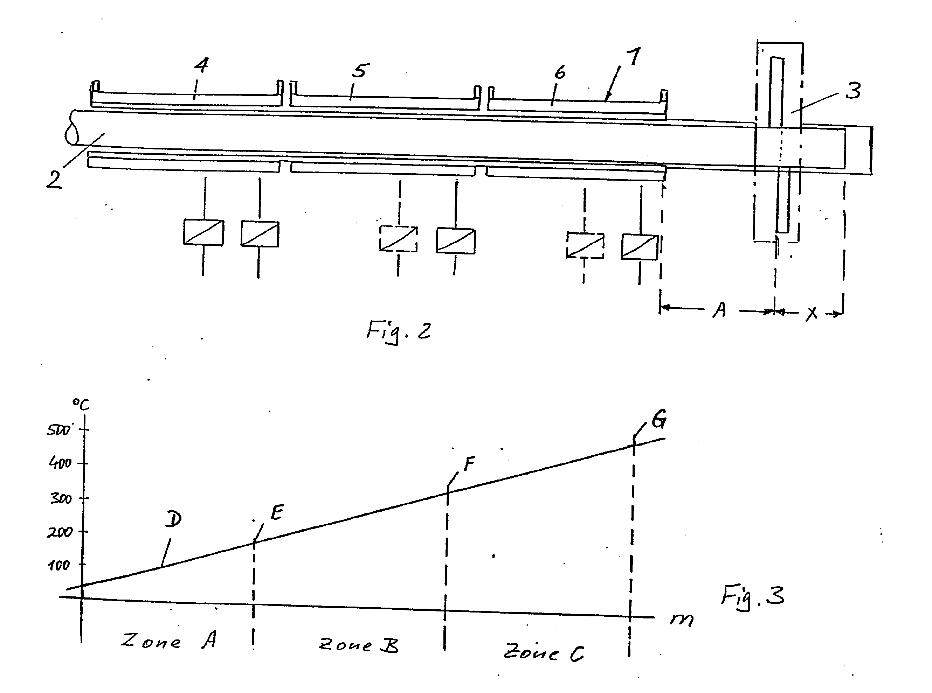

Erst nach Erreichung der Temperatursollwerte in allen Heizzonen A, B, C kann der Aluminiumstrang 2 um die Strecke A + X aus der Heizzone C herausgedrückt werden (Fig. 2), um einen Block von der Länge X mit der Warmschere 3 vom Aluminiumstrang 2 abscheren zu können. A bezeichnet dabei den Abstand zwischen dem vorderen, in der Heizzone C liegenden Ende des Aluminiumstranges 2 und der Warmschere 3. Der Transport des Aluminiumstranges 2 wird beispielsweise durch das Signal "Blockabruf" von einer in der Zeichnung nicht dargestellten Strangpresse eingeleitet. Bevor jedoch die Vorwärtsbewegung des Aluminiumstranges freigegeben wird, müssen die Thermoelemente 8-13 von der Oberfläche des Aluminiumstranges 2 abgehoben werden.

Nach erfolgter Abscherung eines Blockes wird der Reststrang um die Strecke A zurückgeschoben, so daß er die in Fig. 1 gezeigte Lage innerhalb der Induktionsspulen 4-6 einnimmt.

Während des Vorwärtstransportes, des Abscherens und des Rückwärtstransportes des Aluminiumstranges 2 bleiben die Induktionsspulen 4-6 eingeschaltet, falls nicht die mit Hilfe der Thermoelemente 8-10 durch den Rechner 20 ermittelten Temperatursollwerte für den weitergeförderten Aluminiumstrang in den einzelnen Heizzonen A, B, C erreicht sind.

Die Temperatursollwerte des Aluminiumstranges 2 für die einzelnen Heizzonen A, B, C werden wie folgt erreicht:

Während der Heizphase entsprechend Fig. 1 wird über die Thermoelemente 8-10 ständig die Temperatur des Aluminiumstranges 2 in den einzelnen Heizzonen A, B, C gemessen. Erfolgt nun der Befehl "Blockabruf" und die Vorwärtsbewegung des Aluminiumstranges 2 wird eingeleitet, so errechnet der Rechner 20 an Hand der unmittelbar vor dem Abheben der Thermoelemente 8-13 ermittelten Temperaturmeßergebnisse die zur Erreichung des Temperatursollwertes nach dem Vorwärtsfördern um die Strecke A + X und dem Rückwärtsfördern um die Strecke A für jede Heizzone A, B, C erforderliche Menge an Heizenergie. Die Rechenergebnisse werden beispielsweise in Form einer elektrischen Spannung zwischen 0 - 10 V über die Ausgangsleitungen 23-25 der Steuereinrichtung 26 für die Heizenergie der Heizzonen A, B, C zugeführt. Entsprechend der vom Rechner 20 zugeführten Spannung steuert die Steuereinrichtung 26 die Heizleistung der Induktionsspulen 4-6.

Ist die vom Rechner 20 ermittelte Heizenergiemenge an die Heizzonen A, B, C abgegeben worden bevor der Reststrang die in Fig. 1 dargestellte Position eingenommen hat und die Thermoelemente 8-13 wieder auf die Oberfläche des Aluminiumstranges 2 gedrückt sind, wird der Heizbetrieb unterbrochen. Der Heizbetrieb wird wieder aufgenommen, wenn die Thermoelemente 8-13 wieder auf die Oberfläche des Aluminiumstranges 2 gedrückt sind und die Temperaturmessung eine niedrigere Temperatur als den Temperatursollwert für diese Heizzone ergeben hat.

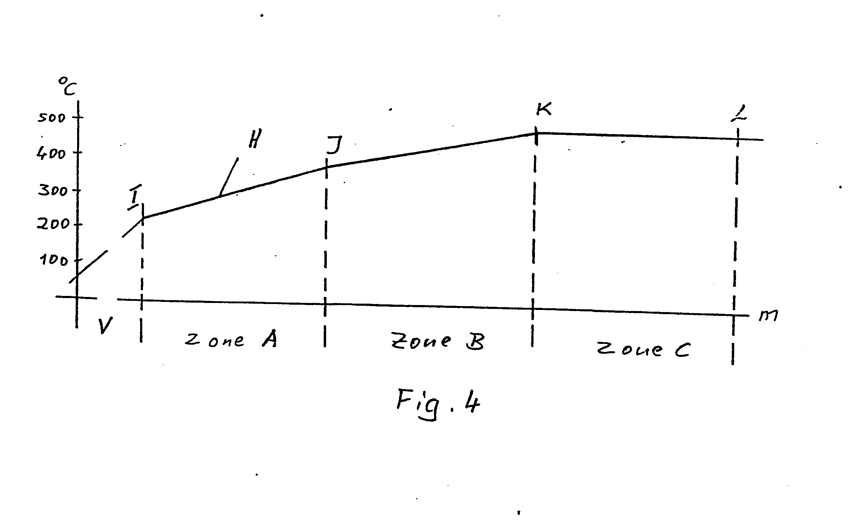

In Fig. 3 ist die Temperatur eines Aluminiumstranges 2 beim Durchlauf durch eine Induktionserwärmungseinrichtung 1 gemäß Fig. 1 und 2 veranschaulicht. Auf der Y-Achse ist die Erwärmungstemperatur und auf der X-Achse die Länge m der aus drei Heizzonen A, B, C bestehenden Erwärmungseinrichtung 1 eingetragen. Mit D ist der Verlauf der Temperatur im Aluminiumstrang 2 bei seinem Transport durch die hintereinander angeordneten Heizzonen A, B, C gekennzeichnet. Die Punkte E, F und G sind Kontrollmeßstellen und zeigen die mit Hilfe der Thermoelemente 8, 9 und 10 einzuregelnden Temperatursollwerte.

Fig. 4 zeigt die Aufheizkurve H eines Aluminiumstranges 2 in drei gasbeheizten Heizzonen A, B, C, denen eine Vorwärmzone V vorgeschaltet ist. Wie die Aufheizkurve H im Punkt I zeigt, wurde der Aluminiumstrang 2 in der Vorwärmzone bereits auf ca. 250°C aufgeheizt, bevor dieser Strangteil in die Heizzone A gelangt und dann bis zum Ende dieser Zone auf ca. 370°C (Punkt J) erwärmt wird. Der Aluminiumstrang 2 erfährt dann bis zum Ende der Heizzone B eine Erwärmung bis auf die Solltemperatur von ca. 500°C (Punkt K). In der Heizzone C wird die Temperatur des Aluminiumstranges 2 sodann auf dieser Solltemperatur (Punkt L) gehalten, um damit einen Temperaturausgleich sowohl über die Lange eines abzuscherenden Blockes als auch radial zur Strangmitte zu bewirken.

Je nach der Beschaffenheit des zu erwärmenden strangförmigen Metallgutes kann in vielen Fällen auf die Thermoelemente 12, 13 verzichtet werden. Dann wird die Heizenergie der Heizzonen B, C für die Dauer des Vorwärtstransportes, des Schervorganges und des Rücktransportes des strangförmigen Metallgutes durch den Rechner 20 und die Steuervorrichtung 26 mit Hilfe der Thermoelemente 8, 9 bzw. 9, 10 ermittelt.

## Patentansprüche

1. Verfahren zum Beheizen von strangförmigem Metall gut, z. B. strangförmigem Aluminium, beim schrittweisen Durchlauf durch mehrere in Reihe hintereinander liegende getrennt steuerbare Heizzonen, für die jeweils eine Solltemperatur vorgegeben und an einer Kontrollmeßstelle überwacht wird, wobei das strangförmige Metallgut nach Erreichen der Solltemperaturen zum Abscheren eines Blockes der Länge X um die Strecke A + X vorwärtsgefördert und nach dem Abscheren des Blockes um die Länge A zurückgefördert wird, wobei A der Abstand zwischen den vor dem Vorwärtsfördern in der letzten Heizzone liegenden vorderen Ende des Metallguts und der Schere ist, **dadurch gekennzeichnet,**

– daß zumindest in der ersten Heizzone an der Oberfläche des Metallguts unmittelbar vor dem Vorwärtsfördern dessen Temperaturen an der Kontrollmeßstelle dieser Heizzone sowie an einer demgegenüber um die Strecke L nach rückwärts versetzten Meßstelle erfaßt werden, wobei L≧ X ist,

– daß aus diesen beiden Temperaturmessungen der Temperaturgradient bestimmt wird und

– daß davon ausgehend die Heizleistung für diese Heizzone und/oder die sich daran anschließende Heizzone bzw. anschließenden Heizzonen ermittelt und aufgebracht wird, die nach dem Vorwärtsfördern um die Strecke A + X und dem Rückwärtsfördern um die Strecke A wenigstens an der Kontrollmeßstelle in der ersten Heizzone im wesentlichen wieder die Solltemperatur ergibt.

2. Verfahren nach Anspruch 1, **dadurch gekennzeichnet,** daß zwischen den Kontrollmeßstellen aufeinanderfolgender Heizzonen ein Temperaturgradient errechnet und zur Bestimmung und Steuerung der Heizleistung benutzt wird, die in der jeweils am weitesten vorn liegenden der aufeinanderfolgenden Heizzonen nach dem Vorwärtsfördern um die Strecke A + X und dem Rückwärtsfördern um die Strecke A an der dortigen Kontrollmeßstelle im wesentlichen wieder die Solltemperatur ergibt.

3. Verfahren nach einem der vorhergehenden Ansprüche, **dadurch gekennzeichnet,** daß die Heizleistung durch Ein- und Ausschalten mindestens einer Heizvorrichtung bei veränderbarer Einschaltdauer bzw. Einschalthäufigkeit geregelt wird.

4. Verfahren nach einem der vorhergehenden Ansprüche, dadurch gekennzeichnet, daß Heizzonen, deren Heizleistung in der Phase zwischen dem Beginn des Vorwärtsförderns und dem Ende des Rückwärtsförderns nicht ausgehend von einem Temperaturgradienten am Metallgut gesteuert wird, mit Hilfe einer Zeitsteuerung beheizt werden.

## Claims

1. Process for heating elongated metal stock, e.g. elongated aluminium, passing in stages through several, independently controlled heating zones arranged in series one behind the other each of which is allocated a target temperature which is monitored at a control measuring point, whereby, after reaching the target temperatures, the elongated metal stock is transported forwards by a distance A + X in order to cut off a block of the length X, and after the block has been cut, the metal stock is transported back again by the distance A, whereby A is the distance between the front end of the material located in the final heating zone before forward transport and the shears, **characterized in that**

– at least in the first heating zone the temperatures on the surface of the metal stock are recorded immediately before forward transport at the control measuring point of this heating zone as well as at a measuring point located behind this by a distance L, whereby L ≧ X,

– the temperature gradient from these two temperature measurements is determined and

– on the basis of this, that heating power for this heating zone and/or the subsequent heating zone or zones is determined and provided which essentially restores the target temperature at least at the control measuring point in the first heating zone after forward transport by the distance A + X and return transport by the distance A.

2. Process in accordance with claim 1, **characterized in that** between the control measuring points of consecutive heating zones a temperature gradient is calculated and used for the determination and control of the heating power, which essentially restores the target temperature at the relevant control measuring point in the heating zone furthest forward after forward transport by the distance A + X and return transport by the distance A.

3. Process in accordance with one of the preceding claims, **characterized in that** the heating power is regulated by switching at least one heating device on and off with adjustable duration and/or frequency of the switching-on phase.

4. Process in accordance with one of the preceding claims, characterized in that heating zones in which the temperature is not controlled in the phase between the beginning of the forward transport and the end of the return transport on the basis of a temperature gradient on the metal stock are heated with the aid of a time switch.

## Revendications

1. Procédé de chauffage de produits métalliques allongés, par exemple de l'alluminium allongé, en procédant étape par étape par zones de chauffage placées l'une derrière l'autre et pilotables séparément dont chacune possède une température nominale et est contrôlée à un point de mesure de contrôle, procédé où le produit métallique allongé est avancé d'une distance A + X lorsque la température nominale est atteinte pour découpe d'un bloc de longueur X, puis est repoussé d'une longueur A après découpe du bloc, où A est la distance entre l'extrémité antérieure de la dernière zone de chauffage du produit métallique avant l'avancement et la cisaille, **caractérisé en ce que**

– au moins dans la première zone de chauffage, la température soit mesurée à la surface du produit métallique au niveau du point de mesure de cette zone de chauffage ainsi qu'à un autre point situé plus en arrière en face de la longueur L, où $L \geq X$,

– le gradient de température soit déterminé à partir de ces deux mesures de température, et

– la puissance de chauffage est ainsi déterminée à partir de ces éléments pour cette zone de chauffe et/ou de la ou les zone(s) immédiatement voisine(s), puissance de chauffage qui donne pour l'essentiel la température nominale au moins au point de mesure dans la première zone de chauffage après le mouvement vers l'avant sur la distance A + X et le mouvement vers l'arrière sur la distance A.

2. Procédé selon la revendication 1 **caractérisé en ce que** entre les points de mesure de contrôle des zones de chauffage placées l'une à la suite de l'autre, un gradient de température est calculé et est utilisé pour la détermination et le pilotage de la puissance de chauffage, qui permet d'atteindre essentiellement à nouveau au point de mesure local la température nominale dans les zones de chauffage les plus éloignées et qui se suivent après le mouvement vers l'avant de la distance A + X et le mouvement vers l'arrière de la distance A.

3. Procédé selon l'une des revendications précédentes **caractérisé en ce que** la puissance de chauffage est appliquée par mise en marche et arrêt d'au moins un dispositif de chauffage pour des durées de fonctionnement et des fréquences de fonctionnement modulables.

4. Procédé selon l'une des revendications précédentes caractérisé en ce que les zones de chauffage dont la puissance de chauffage n'est pas pilotée sur le produit métallique à partir d'un gradient de température dans la phase entre le début du mouvement vers l'avant et la fin du mouvement vers l'arrière, sont chauffées à l'aide d'un système de pilotage temporisé.

Fig. 1

Fig. 2

Fig. 3

Zone A     Zone B     Zone C

EP 0 334 200 B1

Fig. 4

EP 0 334 200 B1